# EUROPÄISCHE PATENTSCHRIFT

(11) **EP 1 561 005 B1**
(45) Veröffentlichungstag und Bekanntmachung des Hinweises auf die Patenterteilung: **19.09.2007**
(21) Anmeldenummer: 03810411.3
(22) Anmeldetag: 28.10.2003
(51) Int. Cl.: C09K 8/52

(54) **VINYLLACTAMCOPOLYMERISATE ALS GASHYDRATINHIBITOREN**
VINYLLACTAM COPOLYMERS USED AS GAS HYDRATE INHIBITORS
COPOLYMERISATS DE VINYLLACTAME COMME INHIBITEURS D'HYDRATES DE GAZ

(30) Priorität: 06.11.2002 DE 10252010
(43) Veröffentlichungstag der Anmeldung: 10.08.2005
(73) Patentinhaber: BASF Aktiengesellschaft, 67056 Ludwigshafen (DE)
(72) Erfinder: ANGEL, Maximilian, 67105 Schifferstadt (DE); NEUBECKER, Karin, 67227 Frankenthal (DE); STEIN, Stefan, 55286 Wörrstadt (DE)
(86) Internationale Anmeldenummer: PCT/EP2003/011928
(87) Internationale Veröffentlichungsnummer: WO 2004/042190

(56) Entgegenhaltungen:
- WO-A-93/25798
- DE-C- 10 059 816
- US-A- 5 723 524
- US-A- 5 848 644
- US-A- 6 103 820
- DATABASE COMPENDEX [Online] ENGINEERING INFORMATION, INC., NEW YORK, NY, US; LEDERHOS J P ET AL: "Effective kinetic inhibitors for natural gas hydrates" Database accession no. EIX96273167331 XP002278057 & CHEM ENG SCI;CHEMICAL ENGINEERING SCIENCE APR 1996 PERGAMON PRESS INC, TARRYTOWN, NY, USA, Bd. 51, Nr. 8, April 1996 (1996-04), Seiten 1221-1229,

## Beschreibung

Die Erfindung betrifft die Verwendung von Copolymerisaten, aufgebaut aus
40 bis 99,5 Gew.-% mindestens eines ethylenisch ungesättigten Lactams A,
0,5 bis 60 Gew.-% n-Butylacrylat (Monomer B) und
0 bis 50 Gew.-% sonstigen Monomeren C
als Gashydratinhibitoren, wobei eine Lösung oder Dispersion des Copolymerisats in Lösemitteln mit einem Flammpunkt größer 50°C verwendet wird.

Es ist bekannt, daß sich in Medien, die Gasmoleküle wie CO₂ oder Kohlenwasserstoffe, z.B. C₁-C₄-Alkane, und Wasser enthalten, unter bestimmten Bedingungen Gashydrate, auch als Clathrathydrate be-zeichnet, bilden können. Diese Gashydrate bestehen aus den ge-nannten Gasmolekülen, die von einem "Käfig" aus Wassermolekülen umgeben sind. Solche Gashydrate treten auch in Wasserenthalten-den Erdöl- oder Erdgasgemischen auf und können so z.B. beim Transport zu Verstopfung der Pipelines führen.

Um dies zu verhindern, werden den Erdöl- oder Erdgasmischungen Gashydratinhibitoren zugesetzt.

Aus der WO 94/12 761, WO 95/32 356 und DE 19935063 sind polymere Additive zur Verhinderung von Clathrathydraten in flüssigen Systemen bekannt, die ein Comonomer mit einem Lactamring im Polymer aufweisen.

Aus DE-A-10010811 ist die Verwendung von Homo- und Copolymeren in Lösungsmitteln mit hohem Flammpunkt als Gashydratinhibitoren be-kannt. Aus EP-A-795567 sind Copolymerisate von Vinyllactamen mit hydrophoben Monomeren bekannt.

Es besteht ein Bedarf an verbesserten und gleichzeitig möglichst leicht herstellbaren und somit preisgünstigen Gashydratinhibitoren.

Insbesondere sollen die Gashydratinhibitoren noch bei möglichst tiefen Temperaturen die Bildung von Gashydraten verhindern.

Aufgabe der vorliegenden Erfindung war, geeignete Polymere für die Verwendung als Gashydratinhibitor zur Verfügung zu stellen, welche die Anforderungen in möglichst hohem Maße erfüllen.

Demgemäß wurde die eingangs definierte Verwendung gefunden.

Monomere A sind in dem Copolymerisat vorzugsweise zu mindestens 60 Gew.-%, besonders bevorzugt zu mindestens 70 Gew.-% vorhanden, ihr Anteil beträgt vorzugsweise maximal bis zu 99 Gew.-%, besond-ers bevorzugt bis zu 95 Gew.-%.

Der Anteil des Monomeren B beträgt vorzugsweise mindestens 5 Gew.-%, besonders bevorzugt mindestens 10 Gew.-%, übersteigt vorzugsweise nicht 40 Gew.-%, insbesondere 30 Gew.-%.

Eine Mitverwendung von Monomeren C ist im Rahmen der Erfindung nicht notwendig, der Anteil der Monomeren C liegt daher z.B. unter 20 Gew.-%, unter 10 Gew.-%, und insbesondere bei 0 Gew.-%.

Das als Gashydratinhibitor verwendete Copolymerisat ist beispielsweise vorzugsweise insgesamt aufgebaut aus
60 bis 99 Gew.-% Lactam A,
1 bis 40 Gew.-% Monomer B und
0 bis 39 Gew.-% Monomere C.

Besonders bevorzugt ist es aufgebaut aus
70 bis 90 Gew.-% Lactam A,
10 bis 30 Gew.-% Monomer B und
0 bis 20 Gew.-% Monomere C
und ganz besonders bevorzugt aus
78 bis 88 Gew.-% Lactam A und
12 bis 22 Gew.-% Monomer B.

Bei den Monomeren A handelt es sich um cyclische oder nicht-cyclische Lactame, bzw. Vinyllactame. Als nicht-cyclische Vinyllactame seien N-Vinylamide, insbesondere N-Vinyl-N-methylacetamid genannt.

Bei Monomeren A handelt es sich bevorzugt um cyclische Lactame, insbesondere um N-Vinyl-Caprolactam oder N-Vinylpyrrolidön oder deren Gemische.

Besonders bevorzugt handelt es sich um N-Vinylpyrrolidon.

Bei dem Monomeren B handelt es sich um n-Butylacrylat.

Als weitere von Monomeren A und B verschiedene Monomere C kommen beliebige andere Monomere in Betracht, z.B. auch Monomere mit funktionellen Gruppen, z.B. Carbonsäure-, Hydroxyl- oder Aminogruppen. Genannt seien z.B. Hydroxy(meth)acrylate, (Meth)acrylamid, (Meth)acrylnitril oder (Meth)acrylsäure oder Acrylamidomethylpropansulfonsäure oder deren Salze.

Vorzugsweise werden die Copolymerisate in Form ihrer Lösung oder Dispersion verwendet.

Als Lösungsmittel mit einem Flammpunkt größer 50°C, besonders bevorzugt größer 61°C und ganz besonders bevorzugt größer 100°C in Betracht kommen polare organische Lösemittel wie Alkohole, Carbonsäureester oder unpolare Lösungsmittel wie aliphatische oder aromatische Kohlenwasserstoffe.

Der Flammpunkt wird nach DIN EN 22719 bestimmt.

Lösemittel mit einem Flammpunkt größer 61°C bzw. größer 100°C sind z.B. 1,2-Ethandiol (111°C) sowie 1,2-Propandiol (107°C).

Der K-Wert des Copolymerisats beträgt vorzugsweise 10 bis 100, besonders bevorzugt 10 bis 45 und ganz besonders bevorzugt 15 bis 40 und insbesondere 22 bis 37 (gemessen an einer Lösung mit 5 Gew.-Teilen Copolymerisat auf 100 Gew.-Teile Ethanol bei 21°C).

Die Herstellung des Copolymerisats kann durch übliche Methoden der radikalischen Polymerisation erfolgen.

In Betracht kommen z.B. Emulsionspolymerisation oder Lösungspolymerisation.

Die Polymerisation kann in Gegenwart üblicher Radikalstarter wie Peroxide oder Azoverbindungen (Menge z.B. 0,1 bis 10 Gew.-% bezogen auf Monomere) in einem Lösemittel ggf. unter Druck bei Temperaturen zwischen 50 bis 160°C durchgeführt werden. Auch die Anwesenheit von die Polymerisation regelnden Substanzen kann vorteilhaft sein. Die Monomeren können vorzugsweise im Zulaufverfahren während der Polymerisation zugeführt werden. Bei sehr stark unterschiedlichen Reaktivitäten der Monomere bieten sich auch Stufen-, Gradientenfahrweise oder für jedes Monomer getrennt gesteuerte Zulaufgeschwindigkeiten an.

Die Feststoffgehalte der erhaltenen Lösungen oder Dispersionen betragen im allgemeinen 10 bis 65 Gew.-%, vorzugsweise 25 bis 45 Gew.-%.

In einer besonderen Ausführungsform wird das Copolymerisat direkt in einem Lösungsmittel mit einem hohen Flammpunkt hergestellt, so dass die oben genannten, bevorzugt verwendeten Lösungen unmittelbar bei Herstellung erhalten werden.

Bei einem derartigen Herstellungsverfahren kann es erforderlich sein, einzelne Zusatzstoffe, z.B. den Initiator in einem anderen Lösemittel mit einem tieferen Flammpunkt als gewünscht zu lösen und einzusetzen.

Derartige Lösemittel können später z.B. durch Destillation entfernt werden.

Ein entsprechendes Verfahren ist z.B. in DE 10010811 beschrieben.

Die Copolymerisate bzw. ihre Lösungen oder Dispersionen werden als Gashydratinhibitoren verwendet.

Den Lösungen oder Dispersionen können für diese Verwendung weitere Zusatzstoffe zugesetzt werden.

In Betracht kommen z.B. weitere Lösemittel, Korrosionsinhibitoren, Viskositätsregler, Stabilisatoren, andere Gashydratinhibitoren, Hilfsmittel zur Verhinderung von Agglomerationen, z.B. Antiagglomerants.

Geeignet sind die Copolymerisate bzw. ihre Lösungen oder Dispersionen insbesondere für Erdöl oder Erdgas; sie zeichnen sich aus durch hohe Wirksamkeit als Gashydratinhibitor auch bei tiefen Temperaturen und bei kleinen verwendeten Mengen.

### Beispiele

Verwendete Polymere
- Polyvinylpyrrolidon, gelöst in Wasser, Feststoffgehalt 30 Gew.-%
- Polyvinylcaprolactam, gelöst in Ethylenglycol, Feststoffgehalt 40 Gew.-%
- Copolymerisat aus 80 Gew.-% Vinylpyrrolidon,
   20 Gew.-% n-Butylacrylat,
   40 gew.-%ige Lösung in Ethylenglycol

### Herstellung des Copolymerisats:

| | | | Konz. | phm |
|---|---|---|---|---|
| Vorlage | 1080,00 g | Ethylenglykol | 100,00 % | 54,82 |
| | 200,00 g | Isopropanol | 100,00 % | 10,15 |
| | 40,00 g | Vinylpyrrolidon | 100,00 % | 2,03 |
| | 120,00 g | Zulauf 1 | | |
| zulauf 01 | 800,00 g | Ethylenglykol | 100,00 % | 40,61 |
| | 1530,00 g | Vinylpyrrolidon | 100,00 % | 77,66 |
| | 400,00 g | n-Butylacrylat | 100,00 % | 20,30 |
| Zulauf 02 | 200,00 g | Isopropanol | 100,00 % | 10,15 |
| | 40,00 g | tert.-Butylperoxi-ethylhexanoat | 98,00 % | 1,99 |
| | 200,00 g | Ethylenglykol | 100,00 % | 10,15 |

Die Vorlage wird auf 85°C Innentemperatur aufgeheizt. Dann wird bei 80°C 5 g Zulauf 2 zugegeben und 3 - 5 Minuten polymerisiert. Danach werden Zulauf 1 in 5 Stunden und Zulauf 2 in 6,5 Stunden zudosiert. Nach Beendigung der Zugabe von Zulauf 2 wird noch 3 Stunden nachpolymerisiert. Flüchtige Anteile werden durch Vakuumdestillation entfernt. Feststoffgehalt 49,2 Gew.-%.

Die K-Werte der Polymeren sind in der Tabelle angegeben, sie werden an einer 5 gew.-%igen Polymerlösung in Ethanol bestimmt.

### Verwendung als Gashydratinhibitor

Die Eignung der Polymeren als Gashydratinhibitor ergibt sich aus der Einfriertemperatur von Gemischen, welche die Polymeren enthalten.

Die "Einfrier-Temperatur" wurde nach der "Ball-Stop-Methode" analog der in Beispiel 1 der WO 95/32356 beschriebenen Testmethode gemessen.

Diese Methode bezieht sich auf zu prüfende Einfrierpunkte von Wasser/THF-Gemischen durch Zusatz verschiedener Polymere (Nachweis der Hydratbildung), die 0,5 %ig in einem Wasser/THF (81/19 Gew.-%)-Gemisch eingefroren werden.

zur Ermittlung des Einfrierpunktes verschiedener Polymere/(Wasser/THF)-Gemische sind folgende Gerätschaften, sowie Reagenzien nötig:
- Wasser/THF-Gemisch (81/19 Gew.-%)
- Temperierbad mit Kältemischung Wasser/Ethylenglykol (5/1)
- Constant-Rührer
- Halterung für Reagenzgläser (5 ml)
- Edelstahlkügelchen zur besseren Durchmischung im Reagenzglas

Es wird eine 0,5 %ige Lösung des zu untersuchenden Polymers in Wasser/THF (81/19) hergestellt. Das Reagenzglas wird zu 2/3 gefüllt, mit einem Edelstahlkügelchen versehen, verschlossen und in der Reagenzglashalterung befestigt. Die Messung wird bei 4°C Badtemperatur und einer Umdrehungsgeschwindigkeit von 20 upm gestartet und stündlich die Temperatur um 0,5°C erniedrigt bis die Probe eingefroren ist bzw. sich die Stahlkugeln im Reagenzglas nicht mehr bewegt. Parallel zu jeder Messung läuft eine Blindprobe.

Die Einfriertemperatur ist in der nachstehenden Tabelle angegeben. Je tiefer die Einfriertemperatur, um so besser in der Regel die Eignung als Gashydratinhibitor.

| Polymer | K-Wert | Einfriertemperatur °C |
|---|---|---|
| Ohne | - | 4,0 |
| Polyvinylpyrrolidon | 30 | 2,5 |
| Polyvinylcaprolactam | 26 | 0,5 |
| Erfindungsgemäßes Polymer (80 VP 20 nBA) | 30,6 | -1 |

## Patentansprüche

1. Verwendung von Copolymerisaten, aufgebaut aus
40 bis 99,5 Gew.-% mindestens eines ethylenisch ungesättigten Lactams A
0,5 bis 60 Gew.-% n-Butylacrylat (Monomer B) und
0 bis 50 Gew.-% sonstigen Monomeren C
als Gashydratinhibitoren, wobei eine Lösung oder Dispersion des Copolymerisats in Lösemitteln mit einem Flammpunkt größer 50°C verwendet wird.

2. Verwendung nach Anspruch 1, **dadurch gekennzeichnet, dass** das Copolymerisat aufgebaut ist aus
60 bis 99 Gew.-% Lactam A
1 bis 40 Gew.-% Monomer B und
0 bis 39 Gew.-% Monomere C.

3. Verwendung nach einem der Ansprüche 1 oder 2, **dadurch** gekenn- zeichnet, dass der Anteil der Monomeren C kleiner 5 Gew.-% ist.

4. Verwendung nach einem der Ansprüche 1 bis 3, **dadurch** gekenn- zeichnet, dass es sich bei dem Lactam um N-Vinylpyrrolidon handelt.

5. Verwendung gemäß einem der Ansprüche 1 bis 4, **dadurch** gekenn- zeichnet, dass das Copolymerisats durch Lösungspolymerisation in Lösemitteln mit einem Flammpunkt größer 50°C hergestellt wird.

6. Verwendung gemäß einem der Ansprüche 1 bis 5, **dadurch** gekenn- zeichnet, dass Copolymerisat einen K-wert von 10 bis 100 hat, gemessen in 5 Gew.-%iger Ethanol-Lösung bei 21°C.

7. Verfahren zur Verhinderung oder Verminderung der Bildung von Gashydraten in Flüssigkeiten oder Gasen, **dadurch** gekennzeich-net, dass diesen Flüssigkeiten oder Gasen Copolymerisate oder deren Lösungen gemäß einem der Ansprüche 1 bis 6 als Gashy-dratinhibitoren zugesetzt werden.

8. Verfahren gemäß Anspruch 7, **dadurch gekennzeichnet, dass** es sich bei den Flüssigkeiten oder Gasen um Erdöl oder Erdgas handelt.

9. Lösungen von Copolymerisaten, welche einen K-Wert von 10 bis 45 in 5 gew.-%iger Ethanol-Lösung bei 21°C haben, aufgebaut aus
40 bis 99,5 Gew. -% mindestens eines ethylenisch ungesättigten, cyclischen Lactams A
0,5 bis 60 Gew.- % n-Butylacrylat (Monomer B)
0 bis 50 Gew..-% sonstigen Monomeren C,
in Lösemitteln mit einem Flammpunkt größer 50°C.

## Claims

1. The use of copolymers composed of
from 40 to 99.5% by weight of at least one ethylenically unsaturated lactam A
from 0.5 to 60% by weight of n-butyl acrylate (monomer B) and
from 0 to 50% by weight of other monomers C
as gas hydrate inhibitors, by using a solution or dispersion of the copolymer in solvents having a flashpoint greater than 50°C.

2. The use according to claim 1, wherein the copolymer is composed of
from 60 to 99% by weight of lactam A
from 1 to 40% by weight of monomer B and
from 0 to 39% by weight of monomers C.

3. The use according to either of claims 1 and 2, wherein the proportion of the monomers C is less than 5% by weight.

4. The use according to any of claims 1 to 3, wherein the lactam is N-vinylpyrrolidone.

5. The use according to any of claims 1 to 4, wherein the copolymer is prepared by solution polymerization in solvents having a flashpoint greater than 50°C.

6. The use according to any of claims 1 to 5, wherein the copolymer has a K value of from 10 to 100, measured in 5% by weight ethanol solution at 21°C.

7. A process for preventing or reducing the formation of gas hydrates in liquids or gases, which comprises adding to these liquids or gases copolymers or solutions thereof according to any of claims 1 to 6 as gas hydrate inhibitors.

8. The process according to claim 7, wherein the liquids or gases are mineral oil or natural gas.

9. A solution of copolymers which has a K value of from 10 to 45 in 5% by weight ethanol solution at 21°C, composed of
from 40 to 99.5% by weight of at least one ethylenically unsaturated, cyclic lactam A
from 0.5 to 60% by weight of n-butyl acrylate (monomer B)
from 0 to 50% by weight of other monomers C
in solvents having a flashpoint greater than 50°C.

## Revendications

1. Utilisation de copolymères constitués de :
40 à 99,5% en poids d'au moins un lactame A éthyléniquement insaturé,
0,5 à 60% en poids d'acrylate de n-butyle (monomère B) et
0 à 50% en poids d'autres monomères C
en tant qu'inhibiteurs d'hydrates de gaz, où l'on utilise une solution ou une dispersion du copolymère dans des solvants ayant un point d'inflammation de plus de 50°C.

2. Utilisation suivant la revendication 1, **caractérisée en ce que** le copolymère est constitué de :
60 à 99% en poids de lactame A,
1 à 40% en poids de monomère B et
0 à 39% en poids de monomères C.

3. Utilisation suivant l'une quelconque des revendications 1 ou 2, **caractérisée en ce que** la fraction des monomères C est de moins de 5% en poids.

4. Utilisation suivant l'une quelconque des revendications 1 à 3, **caractérisée en ce que** le lactame est de la N-vinylpyrrolidone.

5. Utilisation suivant l'une quelconque des revendications 1 à 4, **caractérisée en ce que** le copolymère est préparé par polymérisation en solution, dans des solvants ayant un point d'inflammation de plus de 50°C.

6. Utilisation suivant l'une quelconque des revendications 1 à 5, **caractérisée en ce que** le copolymère possède une valeur K de 10 à 100, mesurée en solution à 5% en poids dans de l'éthanol à 21°C.

7. Procédé d'inhibition ou d'empêchement de la formation d'hydrates de gaz dans des liquides ou des gaz, **caractérisé en ce que** l'on ajoute à ces liquides ou à ces gaz des copolymères ou leurs solutions suivant l'une quelconque des revendications 1 à 6 en tant qu'inhibiteurs d'hydrates de gaz.

8. Procédé suivant la revendication 7, **caractérisé en ce que** les liquides ou les gaz sont du pétrole ou du gaz naturel.

9. Solutions de copolymères présentant une valeur K de 10 à 45 en solution à 5% en poids dans de l'éthanol, constitués de :
40 à 99,5% en poids d'au moins un lactame cyclique A éthyléniquement insaturé,
0,5 à 60% en poids d'acrylate de n-butyle (monomère B) et
0 à 50% en poids d'autres monomères C,
dans des solvants ayant un point d'inflammation de plus de 50°C.
